# EUROPEAN PATENT APPLICATION

(11) **EP 1 852 203 A2**
(43) Date of publication of application: **07.11.2007**
(21) Application number: 07114198.0
(22) Date of filing: 17.11.2003
(51) Int. Cl.: B23D 49/10, B27B 21/04

(54) **Saw with saw blade support**

(30) Priority: 15.11.2002 GB 0226646
(62) Divisional of application: 03767585.7
(71) Applicant: B & Q PLC, Hampshire SO53 3YX (GB)
(72) Inventor: White, Matthew, Haywards Heath Sussex RH16 3PP (GB)
(74) Representative: Hyden, Martin Douglas

(57) **Abstract**

The invention comprises a saw blade support that can be located on the blade of a saw to reduce flexing of the blade in use, comprising support means having a pair of spaced apart sidewalls defining a slot in which at least part of a longitudinal edge of the blade is contained when the support is located on the blade, and at least part of the support being removable from the blade to facilitate the penetration of the blade into an article being sawn wherein in use part of the support can remain located on the blade to support the blade during sawing while another part of the support is removed from the blade to facilitate the penetration of the blade into an article being sawn.

## Description

The present invention relates to saws, and especially saws that operate by a reciprocating action, both manual saws and powered saws.

A standard manual wood saw comprising a long toothed blade attached to a handle is extremely effective at making deep cuts in wood or other articles to be sawn. However, it is well known that due to the flexibility of the saw blade, accuracy and speed of cutting can be difficult with such saws. The tenon saw solves the problem of the flexing of the saw blade by the provision of a stiff metal back to the blade which prevents the blade from flexing. However, the tenon saw has the problem that the stiff back of the blade, being significantly wider than the blade itself, prevents the blade penetrating fully into an article being sawn when deep cuts need to be made.

The present invention seeks to enable a saw to make deep cuts into an article while also reducing the flexing of the blade, thereby improving the speed and accuracy with which the saw may be used.

Accordingly, a first aspect of the invention provides a saw blade support that can be located on the blade of a saw to reduce flexing of the blade in use, comprising support means having a pair of spaced apart sidewalls defining a slot in which at least part of a longitudinal edge of the blade is contained when the support is located on the blade, and at least part of the support being removable from the blade to facilitate the penetration of the blade into an article being sawn wherein in use part of the support can remain located on the blade to support the blade during sawing while another part of the support is removed from the blade to facilitate the penetration of the blade into an article being sawn.

A second aspect of the invention provides a saw comprising a saw blade and a saw blade support according to the first aspect of the invention.

A third aspect of the invention provides a kit of parts comprising a plurality of supports according to the first aspect of the invention, and optionally a saw comprising a saw blade on which one or more of the supports at a time may be located. Preferably each of the supports is different (for example in length) to the (or each) other support.

Reference, in this specification, to "the support" is intended to include a reference to each support of a kit according to the third aspect of the invention (as well as referring to the support of a saw according to the second aspect of the invention).

The invention ingeniously provides the advantages of a standard wood saw (for example) with the advantages of a tenon saw, while substantially eliminating the drawbacks of both.

The saw preferably comprises a handle to which the saw blade is attached. Preferably the saw comprises a handsaw (for example a wood saw or the like).

Alternatively, the saw may comprise a powered saw in which the saw blade performs a reciprocating motion in use. The powered saw (which may be cordless - i.e. including its own source of power - or mains powered) preferably includes a main body containing a motor that powers the saw blade.

The support, which preferably is elongate in shape, is preferably substantially rigid. It is preferably formed from a plastics material (for example polypropylene or polyethylene) and/or metal (for example aluminium or steel). The support may be formed by being moulded, cast, extruded, sintered, etc.

The support preferably includes attachment means by which the support is attached or attachable to the saw. The support may be attached or attachable to the handle and/or the main body and/or the blade, of the saw.

The support may be arranged such that it is attached to the saw at the commencement of sawing through an article so that the blade is substantially prevented from flexing during the initial stages of sawing, thereby enabling accurate and fast sawing. As the saw blade penetrates the article being sawn, the support may be arranged to be removed entirely from the saw, to avoid the support preventing the blade penetrating sufficiently into the article. In such embodiments, the support may be attachable to the saw via the blade and/or the handle and/or the main body (where present). Preferably, however, in such embodiments the support is attachable to the saw only via attachment to the blade of the saw (the saw in such cases preferably is a handsaw rather than a powered saw). In such embodiments, therefore, the attachment means and the support means (described below) of the support preferably are one and the same thing.

In particularly preferred embodiments, however, the support is pivotably attached or attachable to the saw. Advantageously, the removal of at least part of the support from the blade to facilitate the penetration of the blade into an article being sawn comprises pivoting of the support with respect to the blade. Most preferably, the support is pivotable with respect to the blade such that as the blade penetrates an article being sawn in use, the support rests on the exterior of the article. It is preferred for the support to pivot from the handle or the main body of the saw, or from an end region of the saw blade adjacent to the handle or main body, but in general the support could pivot from substantially any part of the saw. The support may pivot about a hinge or other pivot. Alternatively, the support may be pivotably attached or attachable to the saw by means of a flexible portion by which the support may pivot with respect to the saw blade.

The support or saw may include a resilient part, preferably a spring, by which the support is biased to be located on the blade of the saw in use. In this way, for example, it may be ensured that the support provides as much anti-flexing support to the blade as possible, even as the blade penetrates the article being sawn and hence begins to be removed from part of the blade. The support preferably is located on the upper edge of the saw blade, and hence alternatively this may simply be achieved by the weight of the support.

In some embodiments of the invention, part of the support may remain located on the blade (to support the blade) while another part of the support is removed from the blade to facilitate the penetration of the blade into the article being sawn. Advantageously, in such embodiments the support is removed from an end of the blade furthest from the handle (or main body) before it is removed from the opposite end of the blade nearest to the handle (or main body). For this reason (for example) the support may include a plurality of pivots such that sections of the support may pivot with respect to the blade. Alternatively, the support may comprise a plurality of parts pivotable from the same pivot point, each part having a different length to that or the (or each) other part. In other embodiments the support may be attachable to, and pivotable with respect to, the saw at any of a plurality of pivot points situated on (preferably along) the handle and/or the blade of the saw (and/or the main body of the saw, for those embodiments including a main body).

The support preferably includes a support means that supports the blade in use, thereby reducing flexing of the blade. The support means preferably comprises a pair of spaced apart sidewalls defining a slot in which a longitudinal edge of the blade is contained when the support is located on the blade. The longitudinal edge of the blade preferably is a tight fit in the slot (but, at least in the broadest aspects of the invention there need not be a tight fit between the blade and the slot, as long as the support reduces the ability of the blade to flex). In some preferred embodiments, the slot includes one or more ribs that support the blade when the support is located on the blade. Additionally or alternatively the support may be located on the blade by means of a magnetic attachment, by means of cam action clips, or any other suitable attachment.

Other types of support means are, however, possible. For example, the support means may comprise a framework (e.g. a "space frame") that is locatable on the blade. Advantageously, the support means of the support may comprise one or more elongate members arranged to extend along one or both opposite faces of at least part of the length of the blade. The (or each) elongate member may be locatable on the blade simply by means of its attachment to the saw; for example, the (or each) elongate member may be pivotably attached (or attachable) to the saw in such a way that the elongate member extends along side the blade, and for example is held in place by its own weight. Additionally or alternatively there may be some other form of attachment of the (or each) elongate member to the saw, for example it may be locatable on the saw blade by means of a magnetic attachment to the blade.

Embodiments of the invention will now be described, by way of example, with reference to the accompanying drawings, of which:
Figures 1 and 2 show two embodiments of non-pivoting saw blade support according to the invention, used in conjunction with a handsaw;
Figures 3 to 7 show various embodiments of pivoting saw blade supports according to the invention, used in conjunction with a handsaw;
Figure 8 shows an embodiment of a double-sided tenon saw with removable support in accordance with the invention;
Figure 9 shows two views of an embodiment of a saw blade support according to the invention in conjunction with a powered reciprocating saw;
Figure 10 shows two views of a handsaw having a support in the form of a pair of elongate members pivotably extending along opposite faces of the blade of the saw;
Figure 11 shows two view of a handsaw having a support and a pivotal means with return mechanism for securing the support to the handle of the saw;
Figure 12 shows two views of a handsaw having a support and a pivotal means with return mechanism with sliding clip for securing the support to the handle of the saw;
Figure 13 shows three views of a handsaw having a support and a pivotal means for securing the support to the handle of the saw, the pivotal means comprising an integral axel located in the handle of the saw ;
Figure 14 shows three views of a handsaw having a support and a pivotal means for securing the support to the handle of the saw, the pivotal means comprising a blade with an integral return spring;
Figure 15; shows two views of a handsaw having a support and a pivotal means with spring axel for securing the support to the handle of the saw and easy clipping system for attaching the support to the saw handle;
Figure 16; shows three views of a handsaw having a support and a pivotal means for securing the support to the handle of the saw, the support having integral moulded leaf/cantilever springs;
Figure 17 shows a handsaw having a support and a pivotal means for securing the support to the handle of the saw, the pivotal means comprising a leaf spring associated with the handle of the saw; and
Figure 18 shows a handsaw having a support and a pivotal means for securing the support to the handle of the saw, the pivotal means comprising a leaf spring associated with the support.

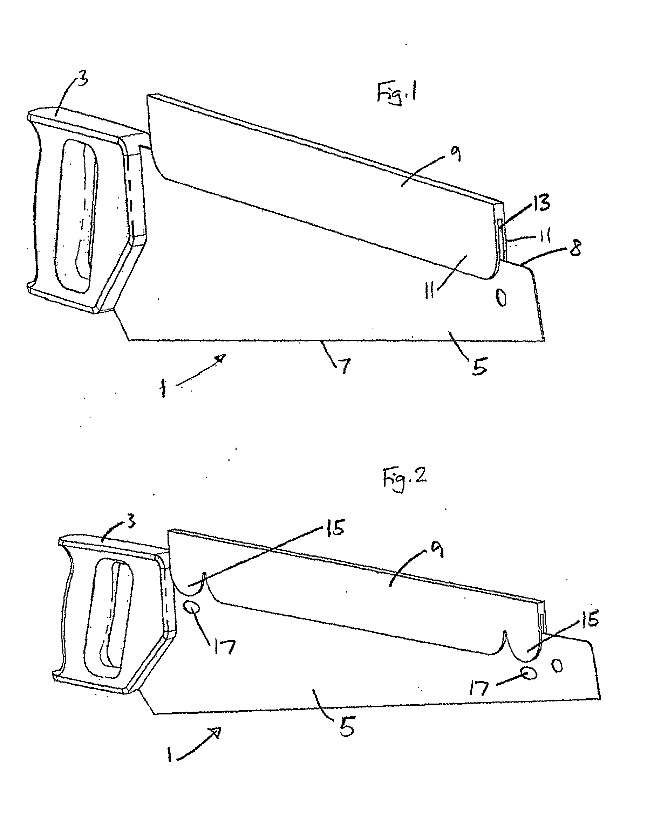

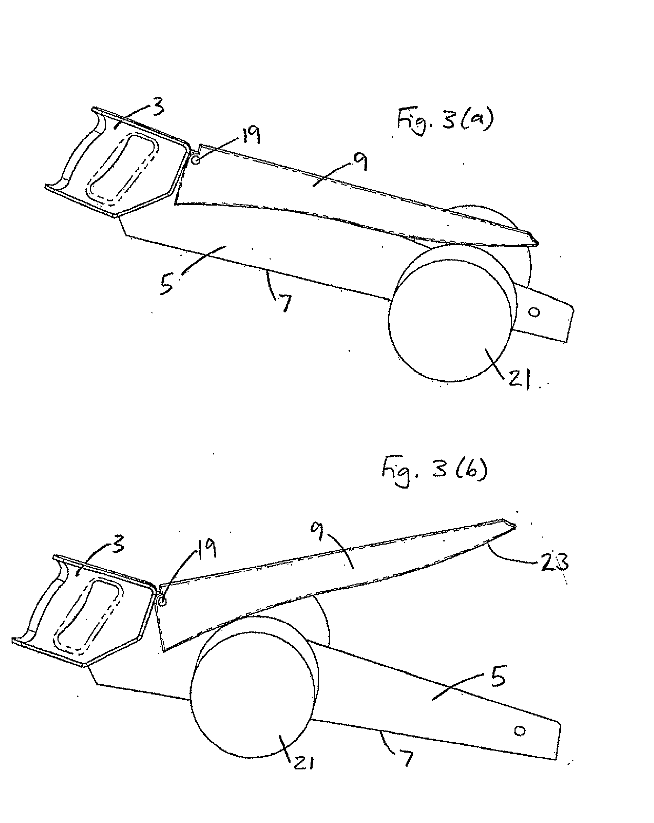

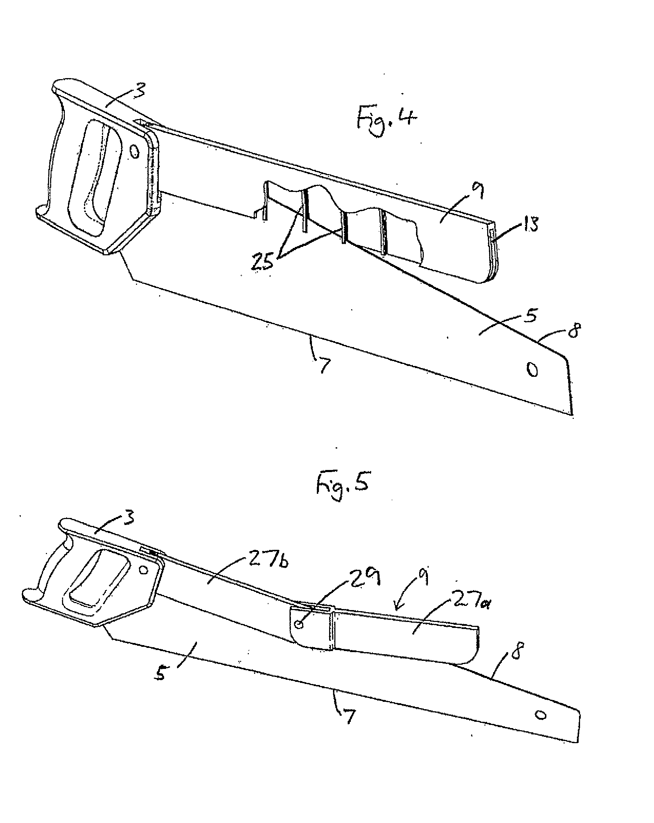

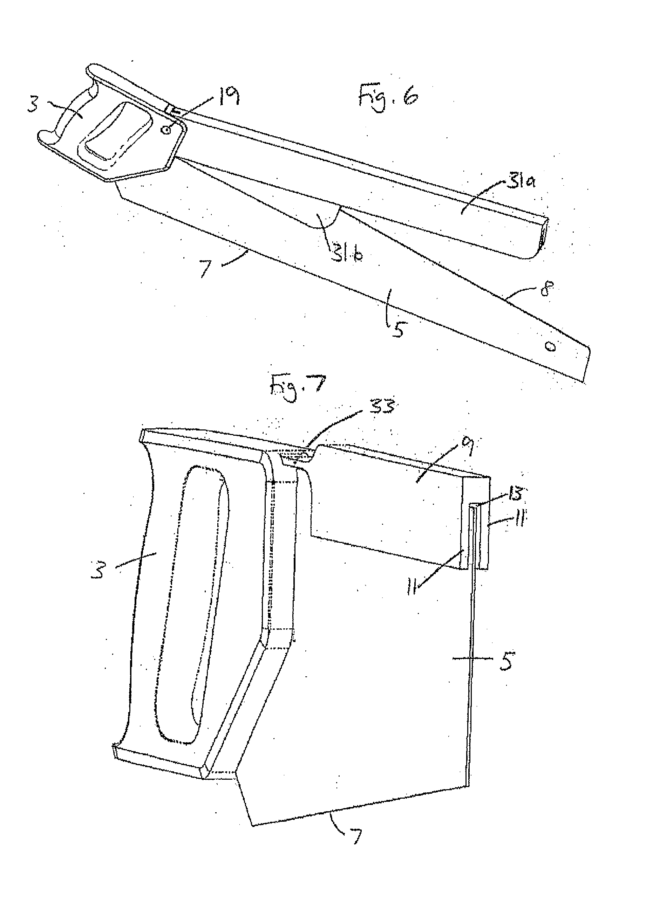

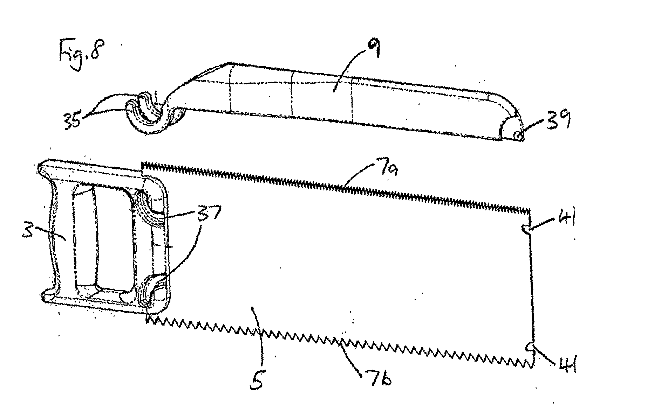

Figure 1 shows a conventional handsaw 1 comprising a handle 3 and a planar saw blade 5 attached thereto. The blade 5 has a lower longitudinal cutting edge 7 provided with saw teeth (not shown, for simplicity). The upper (or back) longitudinal edge 8 of the saw blade has a support 9 according to the invention partially located thereon. The support 9 is elongate and substantially rigid, and preferably is moulded from a plastics material (e.g. polypropylene or polyethylene).

The support 9 comprises a pair of spaced apart sidewalls 11 defining a slot 13 in which the upper longitudinal edge 8 of the saw blade is contained when the support is located on the blade. The support preferably is a tight (interference) fit in the slot 13, and is locatable on, and removable from the blade manually. Additionally or alternatively the support may be located on the blade by means of a magnetic attachment, by means of cam action clips, or any other suitable attachment. It will be appreciated that the support 9 provides rigidity (especially longitudinal rigidity) to the blade when the saw is used to cut into an article (for example a piece of wood). Advantageously, the support 9 substantially prevents longitudinal flexing of the blade 5 when the initial cuts into the article are made, thereby enhancing the speed and accuracy with which the saw may be used. Once the saw has cut deeply into the article, and an upper portion of the blade (and especially the upper edge 8) needs to penetrate into the article, the support 9 may simply be removed from the blade by the user to facilitate this. The saw with the removable support according to the invention therefore combines the advantages of a conventional wood saw and a conventional tenon saw, while avoiding the drawbacks of both.

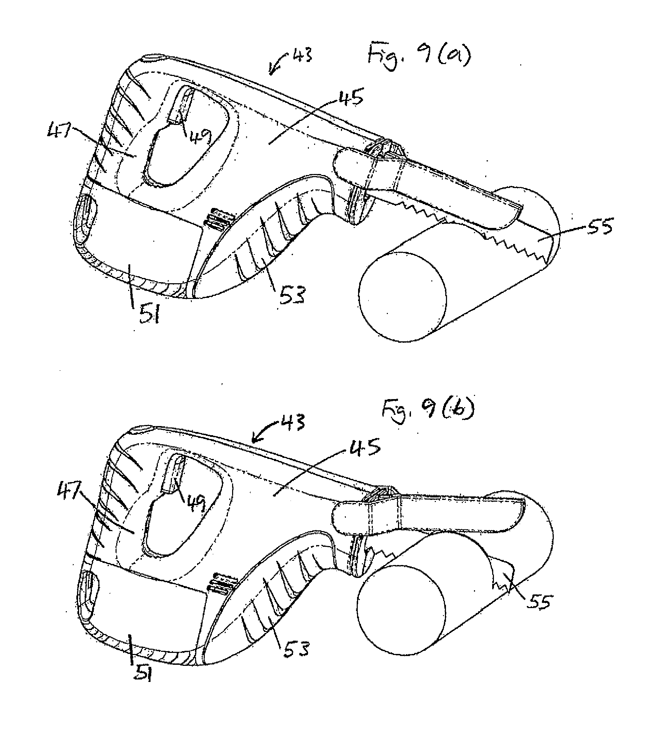

Figure 2 shows a variation on the Figure 1 embodiment in which the support 9 is retained on the blade 5 by means of two inwardly-biased flexible members 15 of the longitudinally opposite ends of the support, that carry inwardly-facing projections (not shown) arranged to interlock with apertures 17 provided in the saw blade.

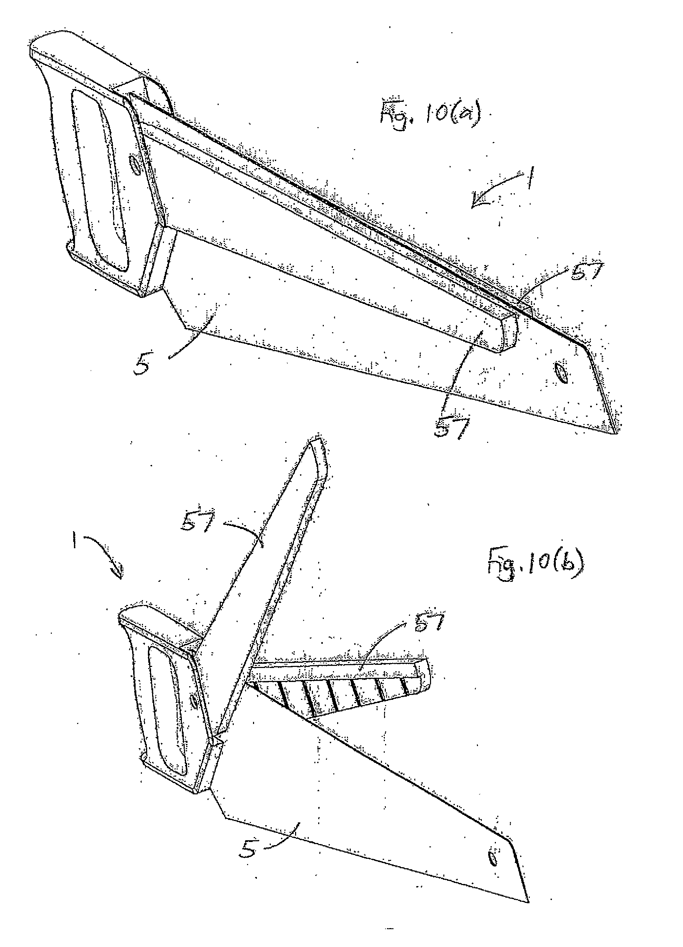

The two views (a and b) of Figure 3 show an alternative embodiment of handsaw 1 in accordance with the invention. In this embodiment, the support 9 is pivotally attached to the saw. The pivotal attachment is by means of a pivot 19 located at the handle end of the saw blade 5, adjacent to the upper edge 8 of the blade. The pivotal attachment of the support 9 to the saw 1 enables at least part of the support to be removed from the saw blade to facilitate the penetration of the blade into an article 21 being sawn, by rotation of the support 9 away from the blade. In particular, the more deeply the blade 5 penetrates into the article 21 being sawn, the further does the support 9 rotate away from the blade at any particular point in the reciprocating (sawing) motion of the blade. The support 9 rests on an upper surface of the article 21 being sawn, as the blade penetrates deeper into the article. This may simply be due to the weight of the support, or a resilient part (preferably a spring) may be provided between the support and the blade, to bias the support towards the blade. This has the advantage of ensuring that the support provides the greatest extent possible of anti-flexing support to the blade at all times.

It will be noticed that a lower leading edge 23 of the pivotally attached support 9 is bevelled to facilitate a smooth passage of the support 9 over the article 21 being sawn.

Figure 4 shows a variation on the embodiment of Figure 3, in which the support is pivotally attached to the saw via the handle 3. Also shown are ribs 25 provided on the internal surfaces of the sidewalls 11 of the support 9 in the slot 13. The ribs 25 enable the slot 13 to be significantly wider than the blade 5, thereby facilitating easy location and removal of the support 9 on the blade, while providing anti-flexing support to the blade, since the ribs themselves preferably are a snug-fit against the blade.

Figure 5 shows a further variation in which the support 9 is divided into two sections 27a and 27b by a further pivot 29 provided part way along the support 9. This enables the front section 27a to rotate away from the blade 5 while the rear section 27b remains located on the blade, thereby maximising the degree of support provided by the blade as the blade cuts into an article. The support may be divided into two, three, or more sections in this way.

Figure 6 shows another variation on this theme, in which the support comprises a plurality (two as shown) of parts, 31 a and 31 b, that pivot from the same pivot point 19, each part having a different length to that of the (or each) other part. This enables the (or each) shorter part to remain located on the blade while the longer part(s) is/are rotated away from the blade.

Figure 7 shows a partial view of an embodiment of the invention in which the pivotal attachment of the support is via a flexible portion 33 of the support.

Figure 8 shows an embodiment of the invention in which the blade 5 of the saw 1 has two cutting edges 7a and 7b provided on opposite longitudinal edges of the blade 5, the support being locatable on either of the two cutting edges of the blade in order to support the blade while the other cutting edge is used to saw an article. Advantageously, as shown, the two cutting edges 7a and 7b of the saw blade may have differing teeth sizes, for example relatively small teeth for fine work and relatively large teeth for when larger cuts need to be made.

In the embodiment shown in Figure 8, the support 9 is attachable to the saw 1 via interlocking arms 35 and grooves 37, by which the support 9 rotates into interlocking engagement with the handle 3 of the saw 1. Additionally, a projection 39 on the support may interlock with a respective recess 41 at the opposite end of the saw blade 5 to prevent the support from rotating with respect to the blade. Alternatively, in order to enable such rotation, the projection 39 may simply be released from the recess 41.

The Figure 8 embodiment of the invention is, in effect, a double-sided tenon saw with a removable support. Additionally (and optionally) the support may be pivotally attached to the saw (i.e. when the projection 39 is released from the recess 41).

The two views (a and b) of Figure 9 illustrate the use of a support according to the invention with an electrically powered reciprocating saw 43. The saw 43 comprises a main body 45 housing a motor (not shown). The main body 45 includes a handle 47, an actuating trigger 49, a battery pack 51 and a handgrip 53. A forwardly-mounted saw blade 55 performs a forward-and-back reciprocating sawing motion under the power of the motor. Pivotally attached to the main body 45 is a support 9 which (as shown in view (a)) locates on the saw blade 55 to prevent it flexing, and (as shown in view (b)) may rotate away from the saw blade to allow the blade to penetrate an article being sawn.

Similarly to the embodiments shown in figures 5 and 6 the support used with a powered saw may be articulated and/or comprise a plurality of parts, for example. Whichever type of support is used, however, it preferably includes friction-reducing means (for example a polytetrafluoroethylene coating or insert(s)) to allow a smooth reciprocating motion by the blade with respect to the support.

The two views ((a) and (b)) of Figure 10 show a handsaw 1 having pivotally attached thereto a support 9 comprising a pair of elongate members 57 extending along opposite longitudinal faces of the saw blade 5. The two elongate members are independently pivotable with respect to the saw blade, as shown by view 10(b). When the elongate members 57 are located on the blade 5, they rest on a part 59 of the handle of the saw and extend along the faces of the blade. Additionally, or alternatively there may be a form of attachment between the elongate member(s) 57 and the blade 5 that facilitates the location of the elongate member(s) on the blade. For example, the elongate member(s) 57 may include one or more magnets that enable a magnetic attachment of the elongate member(s) to the blade.

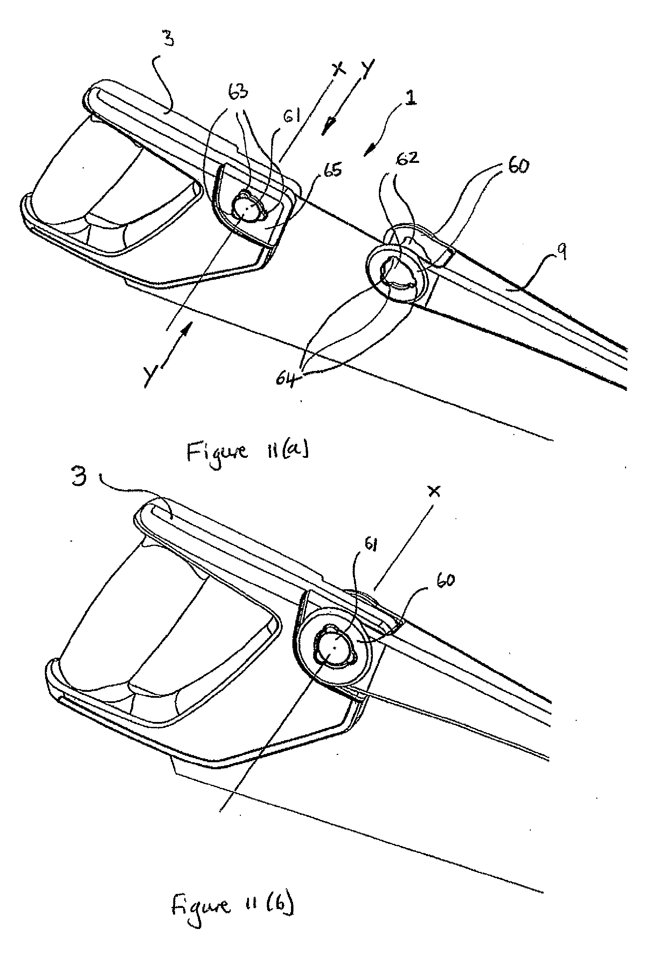

The two views ((a) and (b)) of Figure 11 show a handsaw 1 having pivotally attached thereto a support 9 attachable to the handsaw 1 via interlocking arms 60 which engage and co-operate with pivoting members 61 (only one is shown) on the handle 3 of the handsaw 1. The buttons 61 rotate about their axis (X). The support 9 is one piece. Preferably the saw handle 3 includes a mechanism (not shown) which is associated with the pivoting members 61 and which is designed to return the pivoting members 61 and support 9 to the resting position when the saw is not in use. The return mechanism may be a resilient biasing means such as for example a spring. The pivoting members 61 also comprise a further biasing means which acts against the depression of the pivoting members 61 into the body of the saw handle 3, which occurs during attachment and disengagement of the support 9. The interlocking arms 60 of the support 9 each comprise an opening 62 having internal dimensions that are slightly larger than the external peripheral dimensions of the pivoting members 61 so that the openings 62 may be engaged over and with the pivoting members 61 when the support 9 is located on the saw handle 3. In the illustrated embodiment the pivoting members 61 have three spigots 63 which co-operate with three indentations 64 on the openings 62 of the interlocking arms 60. These three spigots 63 also have corresponding holes in the handle (not shown) which allow the spigots 63 to move below the plane of saw handle surface 65 when the pivoting members 61 are depressed and pushed into the saw handle 3 in direction shown by arrow (Y). The pivoting members 61 with their spigots 63 interlock with the interlocking arms 60 and their openings 62 with indentations 64 to ensure that when the support 9 is pivoted about axis (x) during use then the pivoting members rotate and apply force to the resilient bias inside the saw handle 3 and attached to the pivoting member.

In this embodiment attachment and disengagement of the support 9 with the saw handle 3 is a simple operation. For attachment the interlocking arms 60 may be simply be pushed over the pivoting members 61, which are spring loaded causing the pivoting members 61 to temporarily be forced against the biasing means and into the body of the saw handle 3; once the openings 62 of the interlocking arms 60 are aligned with the pivoting members 61 the pivoting members 61 are then able to pop back out if the saw handle body 3 under action of the biasing means. For disengagement the pivoting members 61 are simply depressed into the saw handle body 3 and the support openings 62 are pulled out of alignment with the pivoting members 61 enabling the interlocking arms 60 to disengage and the support 9 to be removed.

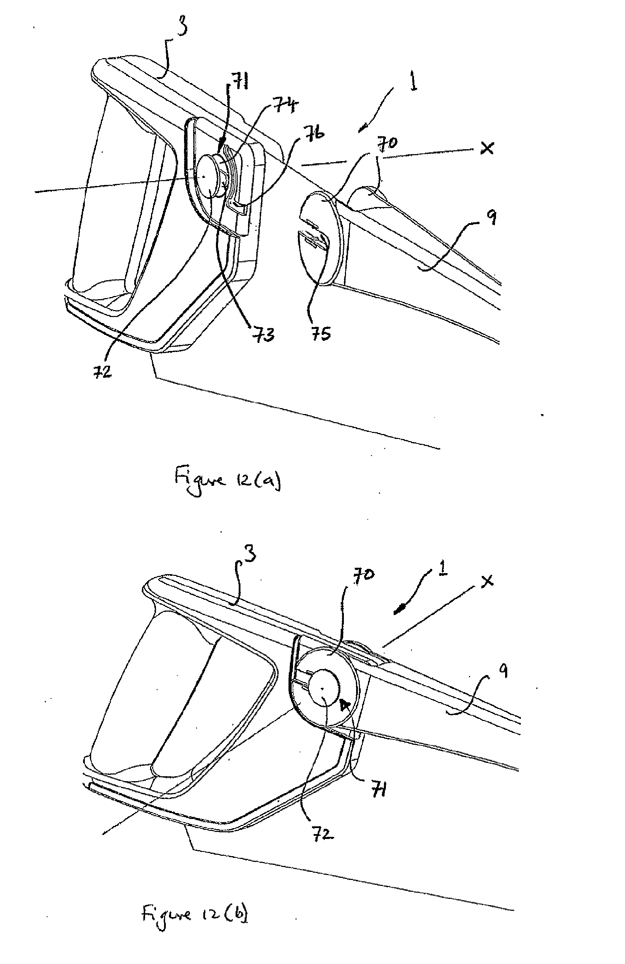

The two views ((a) and (b)) of Figure 12 show a handsaw 1 having pivotally attached thereto a support 9 attachable to the saw 1 via interlocking arms 70 which engage and co-operate with pivoting members 71 (only one is shown) on the handle 3 of the saw 1. The pivoting members 71 rotate about their axis (X). The support 9 is one piece and preferably the saw handle 3 includes a mechanism (not shown) which is associated with the pivoting members 71 and which is designed to return the pivoting members 71 and support 9 to the resting position when the saw 1 is not in use. The return mechanism may be a resilient biasing means such as for example a spring. In this embodiment the pivoting members 71 are able to rotate but unlike the pivoting members 61 of Figure 11 are unable to be depressed into the body of the handle 3. The pivoting members 71 each have a flange section 72 that is attached to or integral with an elongated section 73 which is integral with or attached to the body of the pivoting member 74. The elongated section 73 is capable of engaging with the interlocking arms 70 of the support 9 via a slot 75 located in the ends of the interlocking arms 70. The interlocking arms 70 of the support 9 each comprise a slot 75 having internal dimensions that are slightly larger than the external peripheral dimensions of the elongated section 73 of the pivoting member 71 so that the elongated sections 73 may be easily inserted into and removed from the slots 75 of the interlocking arms 70 of the support 9 during attachment and disengagement of the support 9 from the handle of the saw 3. In this embodiment also illustrated is a means for preventing the support from being disengaged from the saw during use. This means of disengagement comprises a slot or grove 76 in the body of the handle 3 which engages with a corresponding pin (not shown) on the internal face (not shown) of the support 9. On assembly of the support 9 with the handle 3 the pin engages with and is located within the groove 76 and, as the support 9 is rotated during use, travels within the groove 76. The grove 76 is orientated on the handle 3 in such a fashion that the pin may only be removed from the groove 76 when the saw 1 and attached support 9 are not in use and under normal disassembly conditions. Figure 12(a) shows the location of the support 9 prior to assembly and Figure 12(b) shows the support 9 attached to the handle 3 of the saw 1.

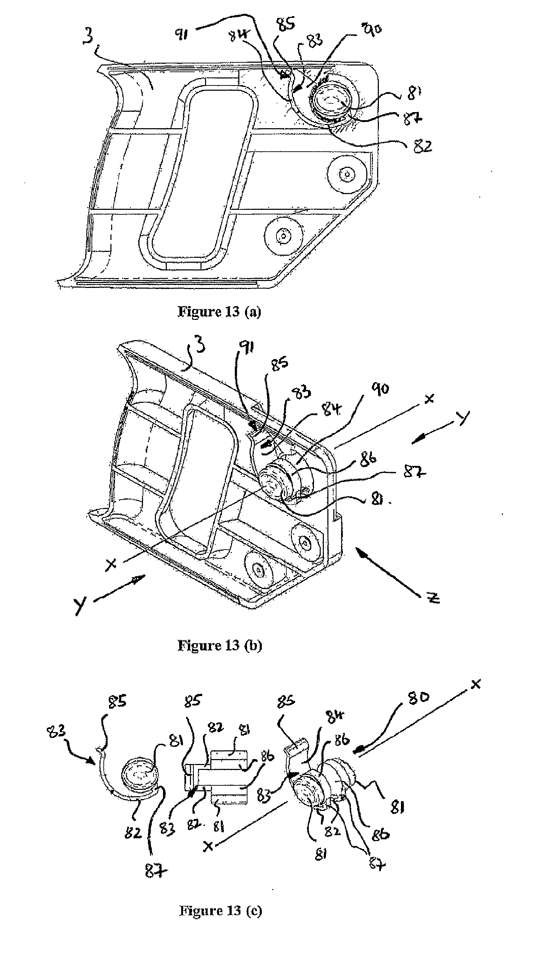

The three views ((a), (b) and (c)) of Figure 13 show a unitary integral pivoting member 80 for use with saw supports of the present invention. In the illustrated embodiment the unitary integral pivoting member 80 has three key functions. The first is to engage with the interlocking arms of a saw support, the second is to afford biasing means that enable the pivoting member 80 and the support 9 when attached thereto to return to the rest position when the saw is not in use and the third function is to provide resilient means for engagement and disengagement of the unitary integral pivoting member 80 with the interlocking arms of the support 9. In the illustrated embodiment of Figure 13 the support could be similar to that as described in relation to Figure 11, where the interlocking arms 60 have openings 62 that fit over and co-operate with the pivoting members 61. In an alternative embodiment the unitary integral pivoting member 80 may utilise an engaging and disengaging mechanism similar to that as described in relation to the embodiment illustrated in Figure 12; in this case the unitary integral pivoting member 80 would only require functions one and two indicated above. The unitary integral pivoting member 80 comprises two spaced apart surfaces or regions 81 that engage with the saw support on assembly and which are preferably in alignment with each other and preferably in alignment on their axis of rotation (X) during use. In this embodiment each spaced apart surface 81 for engagement with the interlocking arms of the support are oval in shape. Each spaced apart surface or region 81 is attached to a separate spaced apart arcuate member 82. The separate arcuate members are 82 attached to each other at a point 83 that is remote from the axis of rotation (x) of the unitary integral pivoting member 80 during use of the saw 1 with support 9. In a preferred embodiment the arcuate members 82 are attached at their ends, preferably by means of an arcuate section 84 that follows the path or the arcuate members 82. Preferably at the end of the arcuate section 83 remote from the spaced apart surfaces or regions 81 there is an engagement lip 85. In a further preferred embodiment each arcuate member 82 is attached to a support member 86 which supports the spaced apart engagement surfaces 81. These support members 86 are not substantially visible when the saw 1 is assembled. In a further preferred embodiment the arcuate members 82 are attached to the support members 86 by means of a connecting arm 87 that is attached approximately perpendicular to the surface of the arcuate member 82. It is preferred that each combination of support member 86 and arcuate member 82 are co-planar and preferably when present that the connecting arm 87 is also co-planar. When the unitary integral pivoting member 80 is assembled in a saw handle the spaced apart engagement surfaces or regions 81 protrude from the body of the handle and are available for engagement with and co-operation with a saw support. The remainder of the unitary integral pivoting member 80 is located within a cavity 90 within the handle 3 which is designed to co-operate with the unitary integral pivoting member 80 to ensure that all of its functions may be realised. The cavity 90 is designed to allow free rotation of the support members 86 and support surfaces 81 attached thereto about their axis of rotation (x). The engagement lip 85 is securely engaged with the body of the handle so that it is constrained from movement 91. The arcuate members 82 and reminder of the arcuate section 83 are located in the cavity 90 and in which they are able to deform under load. With the unitary integral pivoting member 80 constrained in this fashion within the saw handle body 3 the engagement surfaces 81 are held in position after assembly with the support by the resilient bias that is provided by the arcuate members 82. These are held in position by the arcuate section 83 secured to the saw body 3 at point 91 via lip 85 of the unitary integral pivoting member 80. The resilient bias is provided by the physical resistance of the arcuate members 82 to the forces applied in a plane (arrows Y) that is perpendicular to the arcuate path (Z) of the arcuate members 82. However, as the arcuate members 82 are spaced apart at this point there is the possibility of relatively limited movement allowing the engaging surfaces 81 to be depressed into the body of the saw handle 3 in the direction Y. When assembled into a saw 1 with support 9 the unitary integral pivoting member 80 provides a further resilient bias that ensures that the support 9 may be pivoted when in engagement with the engaging surfaces 81 of the member 80 whilst at the same time being forced back to the resting state when not in use. This second bias is again provided by the arcuate members 82 and arcuate section 83 when present, which are constrained from movement by the lip 85 and its engagement with the saw handle body 3 at point 91. However when the surfaces 81 are rotated with and by the support 9 the arcuate members 82 are able to deform along the path of rotation that is the arcuate plane (Z), which is approximately perpendicular to the axis of rotation (X) of the unitary integral pivoting member 80. Thus the correct location of the arcuate members 82 in relation to the rotating engaging surfaces 81 ensures that the unitary structure 80 comprises two separate means of resilient bias. The unitary integral pivoting member 80 of the present invention is highly desirable as it may be made from a single material such as for example a plastic material by injection moulding and as it is a single component enables fast and accurate assembly during manufacture of the saw with support. Also the corresponding and co-operating regions of the handle body may easily be manufactured.

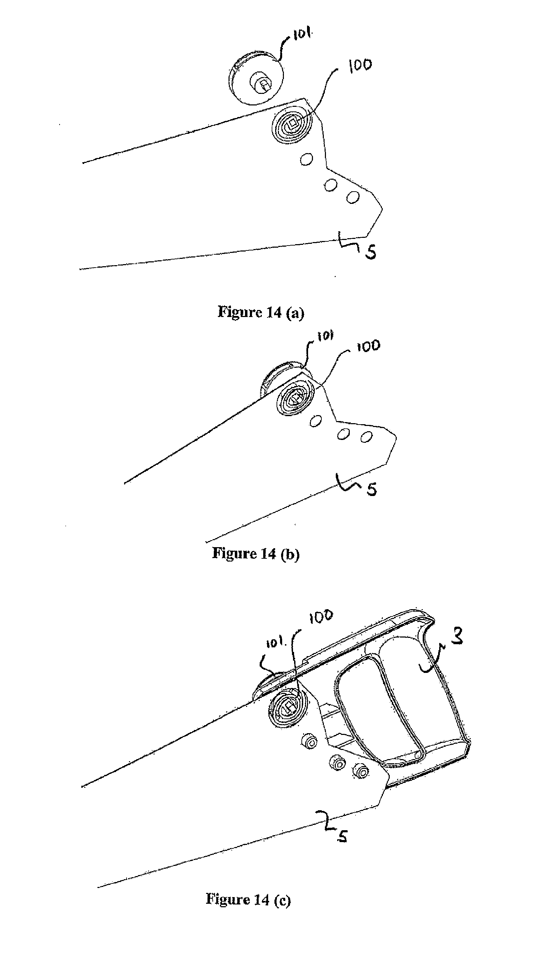

The three views ((a), (b) and (c)) of Figure 14 show a handsaw blade 5 for use with a pivotally attached saw support (not shown). In this embodiment the resilient bias for the return mechanism is provided by a return spring 100 which is integral with the saw blade 5 and which is capable of co-operating with a pivoting member 101 which is interlocked with the interlocking arms of the support (not shown) during use.

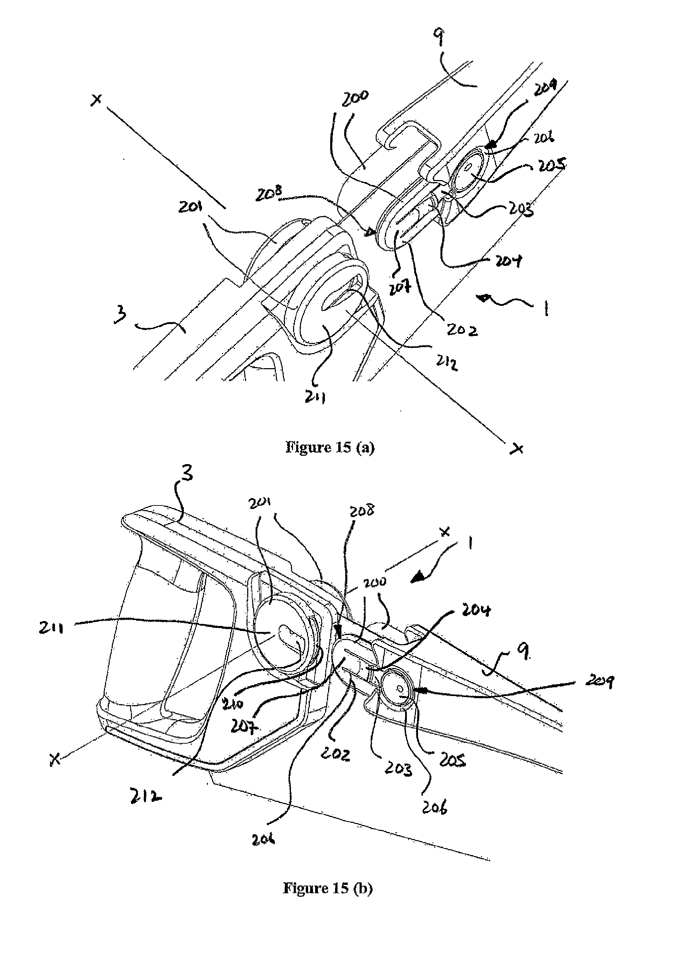

The two views ((a) and (b)) of Figure 15 show a handsaw 1 having support 9 suitable for being pivotally attached thereto attachable to the saw 1 via interlocking arms 200 which engage and co-operate with pivoting members 201 on the handle 3 of the saw 1. The pivoting members 201 rotate about their axis (x). The support 9 is one piece and preferably the handle 3 includes a mechanism (not shown) which is associated with the pivoting members 201 and which is designed to return the pivoting members 201 and support 9 to the resting position when the saw 1 is not in use. The return mechanism may be a resilient biasing means such as for example a spring. In this embodiment the pivoting members 201 are able to rotate but unlike the pivoting members of Figure 11 are unable to be depressed into the body of the handle 3. The embodiment of Figure 15 has an easy to use engagement and disengagement mechanism for attaching and releasing the support 9 from the saw handle 3. The support 9 has two interlocking arms 200 each comprising a substantially planar section 202 with integral deformable flange 203 which is substantially coplanar with the planar section 202. The flange 203 comprises means for engagement 204 with the pivoting member 201 and means for deformation of the flange 205. The preferred means of engagement 204 are one or more protrusions 204 from the outward facing surface of the deformable flange 203. The deformable flange 203 is preferably integral with the planar surface 202 of the interlocking arms 200 and may be formed out of the same material. Preferably the deformable flange 203 is located in a central location within the interlocking arms 200. The deformable flange 203 is preferably a section of material that, at most of its periphery, is separated from the body of the planar section 202 by a narrow gap 206, preferably the gap width 206 being less than the width of the flange 203 as measured across the plane of the flange 203. The flange 203 is preferably attached at a relatively thin 207 section of the flange periphery to the body of the planar section 202. This attachment is preferably remote from the deformation means and towards the end 208 of the planer section 202 that is engaged with the pivotal member 201. The width of the region of attachment 207 is preferably approximately the same width as the width of the flange 203. The deformation means 205 is preferably located on the flange 203 at a location 209 that is remote from the flange attachment 207 and is preferably a section of the flange 203 that does not engage with the pivoting member 201. In a preferred embodiment the deformation means 205 is a section of the flange 203 that has been adapted to be operated by the fingers of the user and is preferably in the form of pads that may be depressed by the user. The length of the flange 203 is preferably at least twice that of its width. By design the flange 203 is resiliently deformable, which means that whilst it is substantially coplanar with the planar section 202 when not deformed it may be deformed to move it out of its coplanar arrangement but it is then capable of returning to its coplanar arrangement once the force inducing its deformation has been removed. This resilient deformation property is due to the presence of a relatively small peripheral attachment 207 of the flange to the body 202 of the interlocking arm 200 at one end of the flange 203. The thickness of the flange 203 should be selected so that, depending on the choice of material for its manufacture, the flange 203 may be resiliently deformed at this point of attachment 207.

In this embodiment the pivoting members 201 each have means for accommodating 210 the planar section 202 of the interlocking arms 200 which also comprises the section of the flange 203 with the means for engagement 204 with the pivoting member 201. The preferred means of accommodation 210 is a slot 210 within the body 211 of the pivoting member 201. The pivoting member 201 also comprises a flange engaging means 212, which is arranged and designed to releaseably engage and disengage with the flange 203 and in particular the means of engagement on the flange 204. In a preferred embodiment the flange engaging means 204 is a further slot 212 that is perpendicular to the main slot 210 in the pivoting member 201 for the interlocking arm 200 and which communicates with the main slot 210. This further slot 212 is exposed at the outward facing external surface of the pivoting member 201.

In this embodiment during assembly the interlocking arms 200 are pushed into the slot 210 of the pivoting member 201 and under the force of insertion the deformable flange 203 deforms enabling the means for engagement 204 to be passed into the main slot 210 of the pivoting member 201 and to engage with the further slot 212 thus locking the interlocking arms 200 within the pivoting member 201. The deformation means 205 does not pass into the main slot 210 but remains accessible outside of the pivoting member 201. To disengage the support 9 the user uses their fingers to depress the deformation means 205 which in turn causes the flange 203 to deform in a resilient fashion disengaging the engagement means of the flange 204 from the further slot 212 in the pivoting member 201 allowing the interlocking arms 200 to be removed from the pivoting member 201 thus separating the support 9 from the saw 1. Once separated the deformable flange 203 is able to regain its resting habit.

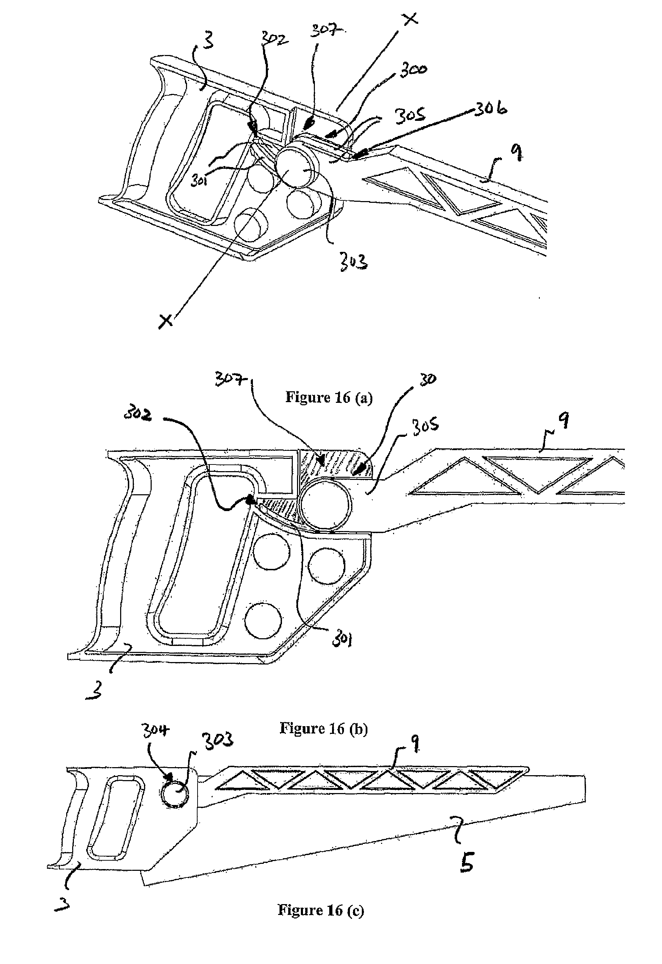

The three views ((a), (b) and (c)) of Figure 16 show a support 9 having a unitary integral pivoting member 300 and a saw handle 3 that is arranged to accommodate this member 300. The support 9 has two arcuate members 301 that are spaced apart and which, in a similar fashion to the embodiment as described in Figure 13, interact with the body 302 of the saw handle 3 to provide a return means for the support 9 when in use. The pivoting member 300 is integral with the support 9 and also comprises two spaced apart sections 303 that engage with circular slots 304 in the body of the saw handle 3. Each pivoting member 300 is located on an interlocking arm 305 of the support 9 which are spaced apart; in this embodiment it is the spaced apart arrangement of the interlocking arms 305 coupled with the fact that each arm 305 is eventually joined at the body 306 of the support 9, which provides the resilient bias to lock the pivoting members 300 into the circular slots 304 of the saw handle body 3. During assembly the pivoting members 300 are pressed towards each other and the whole of the end of the support 9 is passed into a chamber 307 within the saw handle body 3. Once pushed into this chamber 307 the arcuate members 301 engage with and coo-operate with the end of the chamber 302 whereas the pivoting members 303 engage with and can freely rotate within the circular slots 304. To disengage the support 9 the operator simply presses the pivoting members 303 together and once these are clear of the circular slots 304 the support 9 may be removed form the saw handle body 3.

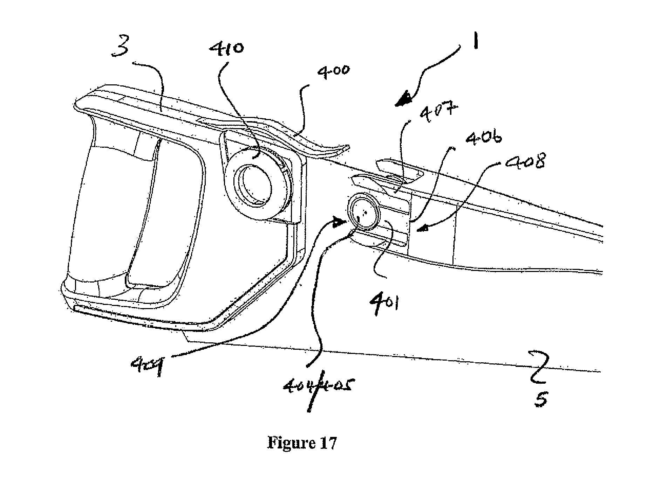

Figure 17 shows a handsaw 1 having a saw handle 3 and a support 9 prior to pivotal attachment of the support 9 to the handle 3. In this embodiment a leaf spring 400 is attached to or integral with the handle 3 and is used is the returning means. There is no returning means located within the body of the saw handle 3. In this embodiment an alternative arrangement for the flange embodiment as described in relation to Figure 15 is illustrated. In the present embodiment the flange 401 is arranged so that the engaging means 404 and the deforming means 405 are integral. In addition the flange attachment 406 is located on the planar region 407 at a location 408 that is remote from the end 409 of the interlocking arm that engages with the pivoting means 410.

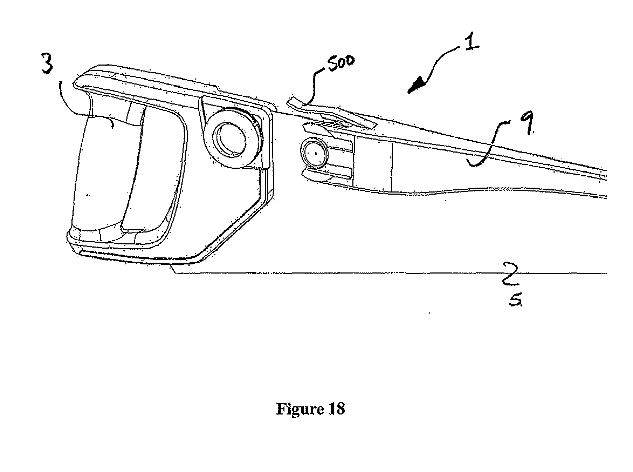

Figure 18 shows a handsaw 1 having a saw handle 3 and a support 9 prior to pivotal attachment of the support 9 to the handle 3. In this embodiment a leaf spring 500 is attached to or is integral with the support 9 and is used is the returning means. There is no returning means located within the body of the saw handle 3.

In all the embodiments of the present invention it is possible to incorporate additional advantageous features into the support and/or saw for use in the present invention. For example a spirit level may be incorporated into the support. In another example the saw blade and/or saw handle and/or support may be have markings to assist in determining the angle of cutting or to ensure that the saw remains at a desired angle during cutting.

## Claims

1. A saw blade support that can be located on the blade of a saw to reduce flexing of the blade in use comprising support means having a pair of spaced apart sidewalls defining a slot in which at least part of a longitudinal edge of the blade is contained when the support is located on the blade, and at least part of the support being removable from the blade to facilitate the penetration of the blade into an article being sawn wherein in use part of the support can remain located on the blade to support the blade during sawing while another part of the support is removed from the blade to facilitate the penetration of the blade into an article being sawn.

2. A support according to claim 1, in which the saw further comprises a handle to which the blade is attached.

3. A support according to claim 1 or 2, in which the saw comprises a handsaw.

4. A support according to any preceding claim, the saw comprising a powered saw in which the saw blade performs a reciprocating motion in use.

5. A support according to claim 4, the saw further comprising a main body containing a motor that powers the saw blade.

6. A support according to any preceding claim, in which the support includes attachment means by which the support is attachable to the saw.

7. A support according to claim 6, in which the support is attachable to the handle and/or the main body and/or the blade, of the saw.

8. A support according to claim 7, in which the support is pivotably attachable to the saw.

9. A support according to claim 8, in which the removal of at least part of the support from the blade to facilitate the penetration of the blade into an article being sawn comprises pivoting of the support with respect to the blade.

10. A support according to claim 9 in which the support is pivotable with respect to the blade such that as the blade penetrates into an article being sawn in use, the support rests on the article.

11. A support according to any one of claims 8 to 10, in which the support pivots from the handle or main body of the saw, or from an end region of the blade adjacent to the handle or main body.

12. A support according to any of claims 8 to 11, in which the support includes a plurality of pivots such that sections of the support may pivot with respect to the blade.

13. A support according to any one of claims 8 to 12, in which the support comprises a plurality of parts pivotable from the same pivot point, each part having a different length to that of the or each other part.

14. A support according to any one of claims 8 to 13, in which the support is pivotably attached or attachable to the saw by means of a flexible portion by which the support may pivot with respect to the saw blade.

15. A support according to any of claims 8 to 14, in which the support is pivotably attachable to the saw at any of a plurality of pivot points situated on the saw.

16. A support according to any preceding claim, in which the longitudinal edge of the blade is a tight fit in the slot.

17. A support according to any preceding claim, in which the slot includes one or more ribs that support the blade when the support is located on the blade.

18. A support according to any preceding claim, in which the support is locatable on the blade by means of a magnetic attachment to the blade and/or by means of one or more clips.

19. A support according to claim 5, in which the support includes friction-reducing means to allow a smooth reciprocating motion by the blade with respect to the support.

20. A support according to any preceding claim, in which the blade of the saw has two cutting edges, the cutting edges being provided on opposite longitudinal edges of the blade, the support being locatable on either cutting edge of the blade in order to support the blade while the other cutting edge of the blade is used to saw an article.

21. A support according to any preceding claim, in which the support includes one or more sawdust vent apertures.

22. A support according to any preceding claim, including a resilient part by which the support is biased to be located on the blade of the saw in use.

23. A saw comprising a saw blade and a saw blade support as described in any one of claims 1 to 22.
